# EUROPEAN PATENT SPECIFICATION

(11) **EP 4 012 827 B1**
(45) Date of publication and mention of the grant of the patent: **30.04.2025**
(21) Application number: 21208748.0
(22) Date of filing: 17.11.2021
(51) Int. Cl.: H01M 50/20

(54) **BATTERY**
BATTERIE
BATTERIE

(30) Priority: 24.11.2020 JP 2020194482
(43) Date of publication of application: 15.06.2022
(73) Proprietor: Suzuki Motor Corporation, Shizuoka 432-8611 (JP)
(72) Inventor: NAGAYA, Keita, Hamamatsu-shi, Shizuoka, 432-8611 (JP)
(74) Representative: Haseltine Lake Kempner LLP

(56) References cited:
- EP-A1- 2 641 822
- US-A1- 2012 181 097
- US-A1- 2013 161 108
- US-A1- 2014 367 183

## Description

### TECHNICAL FIELD

The present invention relates to a battery.

### BACKGROUND ART

In recent years, an electric straddle-type vehicle that travels on electric power has been developed. As the electric straddle-type vehicle, a scooter-type vehicle in which a battery is accommodated below a seat is known (for example, see Patent Literature 1). In the straddle-type vehicle disclosed in Patent Literatures 1 and 2, a pair of left and right seat frames supporting the seat from below are provided, and a battery accommodation space is formed inside the pair of left and right seat frames. An electric device such as a charger or a motor is connected to the battery via a plurality of harnesses. The battery is charged from an external power supply via the charger, and electric power is supplied from the battery to the motor via a plurality of harnesses.

### CITATION LIST

### PATENT LITERATURE

Patent Literature 1: JP-A-2014-051289 and Patent literature 2: EP 2 641 822A

### SUMMARY OF INVENTION

### TECHNICAL PROBLEM

In such a straddle-type vehicle, a harness connector protrudes outward from a battery case of the battery. Therefore, the harness connector protruding from the battery case is easily damaged. In addition, with an amount of the harness connector protruded from the battery case, the accommodation space of the battery is not effectively utilized, and it is difficult to further increase a battery capacity.

The present invention, which is given in the claims, has been made in view of the above points, and an object of the present invention is to provide a battery capable of protecting a connector and sufficiently ensuring a battery capacity.

### SOLUTION TO PROBLEM

A battery to be installed below a seat of an electric straddle-type vehicle, the battery comprising: a battery case of the battery to be installed inside a body of the straddle-type vehicle; and a harness connector installed in the battery to which a harness extending from an electric device is connected, in which a protruding portion is formed in and protrudes from one surface of the battery case, and the harness connector is provided on a side surface of the protruding portion, and the harness connector overlaps the battery case viewed from a normal direction of the one surface, and the harness connector overlaps the protruding portion viewed from a direction perpendicular to the normal direction, thereby solving the above problems.

### ADVANTAGEOUS EFFECTS OF INVENTION

According to the battery of one aspect of the present invention, the harness connector is protected from an external force from a front side by the protruding portion, and the harness connector is protected from an external force from a left-right side by the battery case. The protrusion of the harness connector from an outer surface of the battery case is prevented, and the accommodation space of the battery is effectively utilized for installation of the battery case, so that the battery capacity can be sufficiently ensured.

### BRIEF DESCRIPTION OF DRAWINGS

Fig. 1 is a left side view of a straddle-type vehicle according to the present embodiment.
Fig. 2 is a schematic view of a battery according to a comparative example.
Fig. 3 is a right side view of a vehicle body frame and an electric device according to the present embodiment.
Fig. 4 is a perspective view of the vehicle body frame and the electric device according to the present embodiment.
Fig. 5 is a perspective view of a seat frame cover and a battery according to the present embodiment.
Fig. 6 is a front view of the battery according to the present embodiment.
Fig. 7 is a right side view of the battery according to the present embodiment.

### DESCRIPTION OF EMBODIMENTS

A battery according to an aspect of the present invention is installed below a seat of an electric straddle-type vehicle. A battery case of the battery is installed inside a body of the straddle-type vehicle, and a harness extending from an electric device is connected to a harness connector of the battery. A protruding portion protrudes from one surface of the battery case, and a harness connector is provided on a side surface of the protruding portion. The harness connector overlaps the battery case viewed from a normal direction of the one surface, and the harness connector is protected from an external force from a left-right side by the battery case. The harness connector overlaps the protruding portion viewed from a direction perpendicular to the normal direction, and the harness connector is protected from an external force from a front side by the protruding portion. Protrusion of the harness connector from an outer surface of the battery case is prevented, and an accommodation space of the battery is effectively utilized for installation of the battery case, so that a battery capacity is sufficiently ensured.

### [Example]

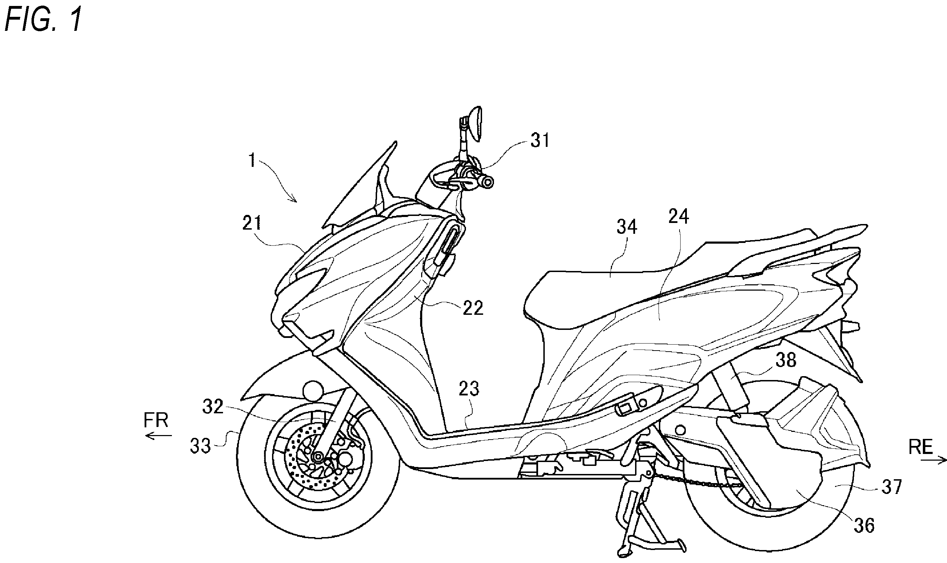

Hereinafter, the present embodiment will be described in detail with reference to the accompanying drawings. In the present embodiment, the straddle-type vehicle is a straddle-type vehicle of a scooter type, but the straddle-type vehicle may be a straddle-type vehicle of an electric or hybrid type. In addition, in the following drawings, an arrow FR indicates a vehicle front side, an arrow RE indicates a vehicle rear side, an arrow L indicates a vehicle left side, and an arrow R indicates a vehicle right side. Fig. 1 is a left side view of the straddle-type vehicle according to the present embodiment.

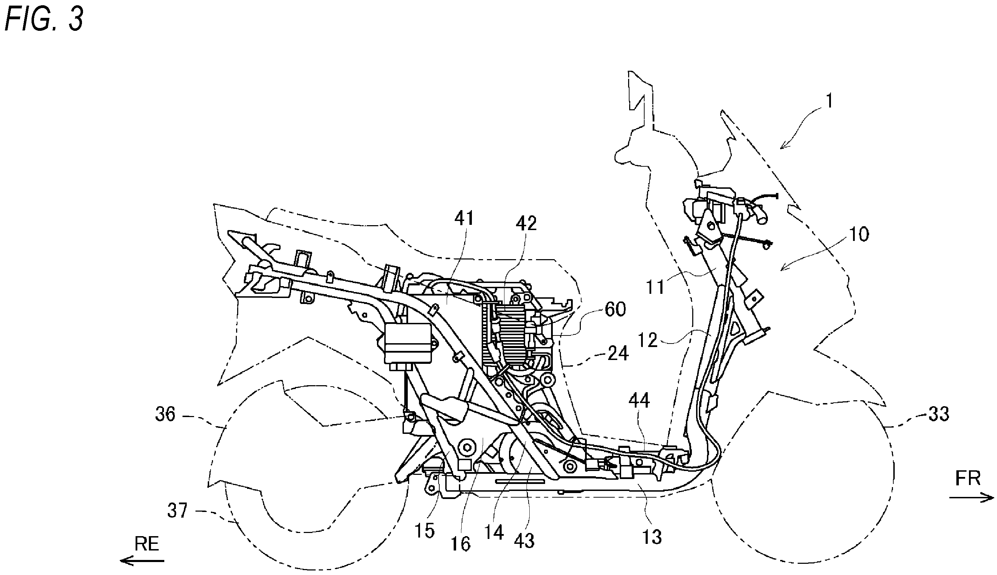

As shown in Fig. 1, a straddle-type vehicle 1 of a scooter type is formed by attaching various covers to an underbone type vehicle body frame 10 (see Fig. 3) as a vehicle body exterior. A front frame cover 21 is provided on a front side of a vehicle, and a leg shield 22 that protects legs of a rider is provided on a rear side of the front frame cover 21. A footboard 23 extends rearward from a lower end of the leg shield 22, and a seat frame cover 24 is provided on a rear side of the footboard 23. A foot rest space for the rider is formed in front of a seat 34 by the leg shield 22 and the footboard 23.

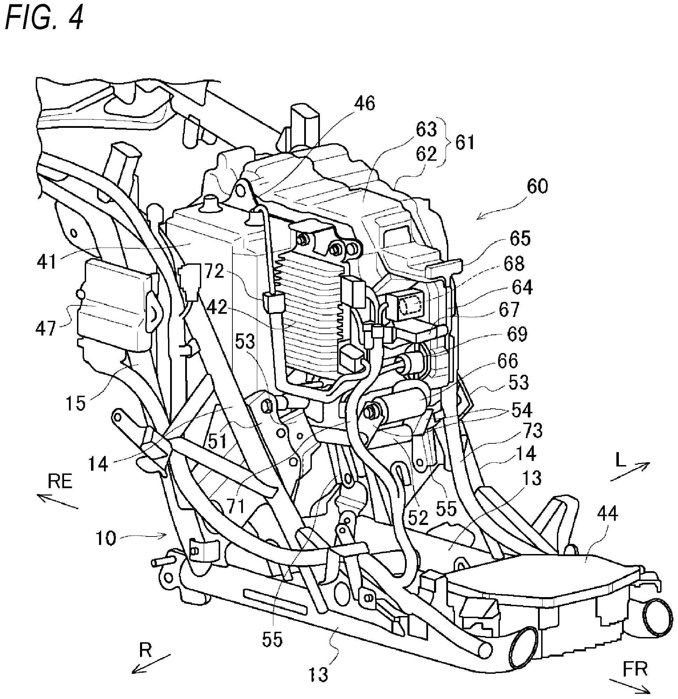

A handle 31 is provided on an upper side of the front frame cover 21, and a front wheel 33 is rotatably supported on a lower side of the front frame cover 21 via a pair of front forks 32. The seat 34 is provided on an upper side of a seat frame cover 24, and a swing arm (not shown) covered by a swing arm cover 36 is provided on a lower side of the seat frame cover 24. A rear wheel 37 is rotatably supported at a rear portion of the swing arm, and a rear portion of the swing arm is connected to the vehicle body frame 10 via a suspension 38. A battery 60 (see Fig. 4) is accommodated below the seat 34.

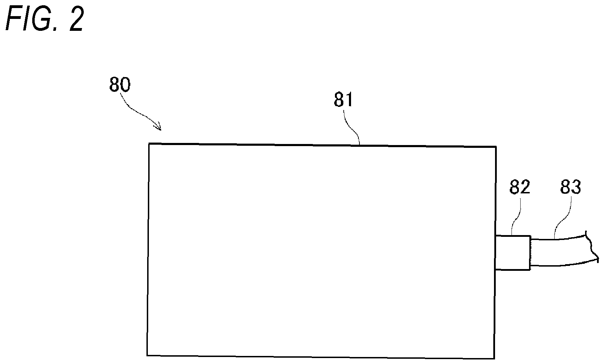

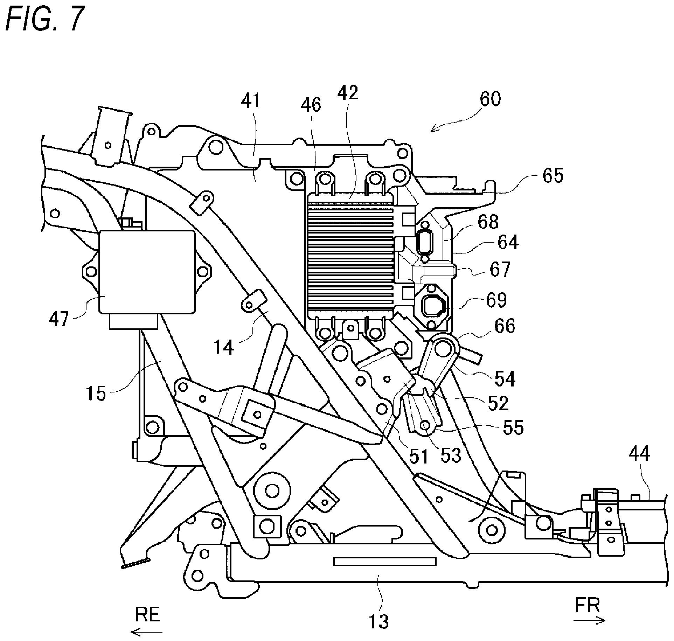

As shown in a comparative example of Fig. 2, a harness connector 82 protrudes from an outer surface of a battery case 81 in a general battery 80, and the electric device such as a charger or a motor is connected to the harness connector 82 via a harness 83. A protective member must be provided around such a harness connector 82 in order to ensure durability and waterproof properties. Since the harness connector 82 protrudes from the outer surface of the battery case 81, a dead space becomes large and it is difficult to ensure a sufficient battery capacity. Therefore, in the battery 60 of the present embodiment, harness connectors 68 and 69 are installed so as to prevent protrusion from a battery case 61 (see Fig. 7).

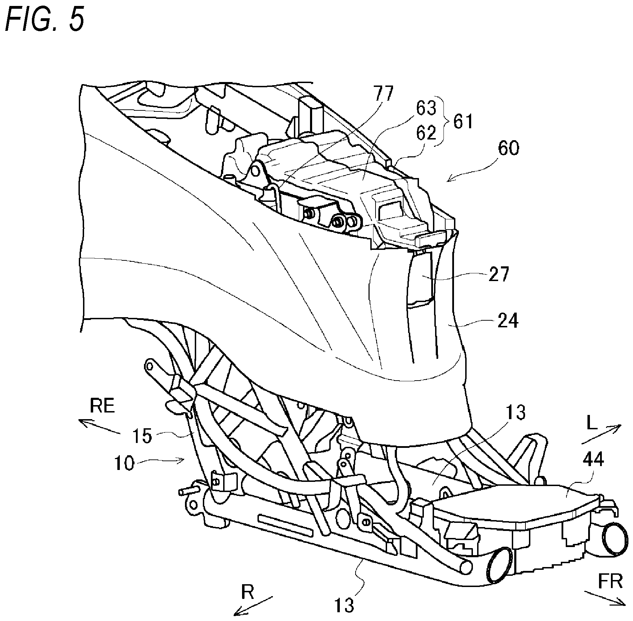

Hereinafter, a vehicle body frame and a battery of the present embodiment will be described with reference to Figs. 3 to 5. Fig. 3 is a right side view of the vehicle body frame and the electric device according to the present embodiment. Fig. 4 is a perspective view of the vehicle body frame and the electric device according to the present embodiment. Fig. 5 is a perspective view of the seat frame cover and the battery according to the present embodiment.

As shown in Fig. 3, a head pipe 11 into which a steering shaft (not shown) is inserted is provided in a front portion of the vehicle body frame 10. A front frame 12 extends downward from the head pipe 11, and a pair of lower frames 13 extend rearward from a lower portion of the front frame 12. A pair of seat frames 14 rise obliquely rearward from substantially middle portions of the pair of lower frames 13, and a pair of support frames 15 rise obliquely rearward from rear portions of the pair of lower frames 13. Rear portions of the pair of support frames 15 are connected to rear portions of the pair of seat frames 14 from below.

An accommodation space of the battery 60 is formed between the pair of seat frames 14 and the pair of support frames 15, that is, inside the seat frame cover 24. A charger 41 that converts power source power into DC power having a predetermined voltage, the battery 60 that is charged with the DC power from the charger 41, and a DC-DC converter 42 that steps down a voltage of the DC power are installed on an upper side of the accommodation space. A motor 43 that is driven by AC power is installed in a lower portion of the accommodation space. An inverter 44 that converts the DC power into AC power is installed in front of the motor 43, and the motor 43 is connected to the battery 60 via the inverter 44.

The pair of seat frames 14 and the pair of support frames 15 are connected to each other in a front-rear direction via a pair of pivot brackets 16. The swing arm (not shown) is connected to the pair of pivot brackets 16 so as to be swingable in an upper-lower direction, and the swing arm cover 36 is attached to the swing arm as described above. A sprocket (not shown) and a chain (not shown) of the motor 43 are covered by the swing arm cover 36. Electric power of the battery 60 is supplied to the motor 43, and a drive force is output from the motor 43 to the rear wheel 37 via the sprocket and the chain.

As shown in Fig. 4, the battery 60 is attached below the seat 34 (see Fig. 1), between the pair of seat frames 14 and the pair of support frames 15. A pair of holder plates 51 are provided on the seat frames 14, and a bridge 52 extending in a vehicle width direction is fixed to the pair of holder plates 51. Since the pair of seat frames 14 are connected to each other via the bridge 52, rigidity and strength of the entire vehicle body frame 10 are improved. The battery 60 is attached to an upper side of the bridge 52, and the motor 43 (see Fig. 3) is attached to a lower side of the bridge 52.

A pair of holder brackets 53 are provided at both ends of the bridge 52, and the pair of holder brackets 53 are fixed to the pair of holder plates 51. The pair of holder plates 51 protrude forward than the pair of seat frames 14, and the pair of holder brackets 53 protrude forward than the pair of holder plates 51. The bridge 52 is positioned forward than the seat frame 14 by the pair of holder brackets 53 and the pair of holder plates 51. The bridge 52 is curved forward from the pair of holder brackets 53 on an outer side in the vehicle width direction toward an inner side in the vehicle width direction so as not to interfere with a lower front side of the battery 60.

The bridge 52 is provided with a pair of battery brackets 54 and a pair of motor brackets 55 spaced apart in the vehicle width direction. The pair of battery brackets 54 protrude upward from the bridge 52 to support the battery 60 from below, and the pair of motor brackets 55 protrude downward from the bridge 52 to support the motor 43 from above. Base end portions of the brackets 54 and 55 are joined to a surface of the bridge 52, and tip end portions of the brackets 54 and 55 have mounting holes for screwing. The pair of battery brackets 54 support the battery 60 near a center of the bridge 52, and the pair of motor brackets 55 support the motor 43 on the outer side in the vehicle width direction than the pair of battery brackets 54.

A battery module (not shown) is accommodated in the battery case 61 of the battery 60. The battery module connects a plurality of battery cells, and the battery module is charged with electric power for traveling. The battery case 61 has a left and right split structure, and includes a case half body 62 on a left side and a case half body 63 on a right side. The case half body 62 on the left side is formed in a box shape with a right side opened, and the case half body 63 on the right side is formed in a box shape with a left side opened. The case half body 62 on the left side is positioned to a left side of the accommodation space, and the case half body 63 on the right side is positioned at a center of the accommodation space.

From a front surface of the battery 60, a vicinity of mating surfaces of the left case half body 62 and the right case half body 63 protrudes forward to form a vertically long protruding portion 64. A seat connecting portion 65 protrudes forward from an upper portion of a front surface of the case half body 63 on the right side, and a case fixing portion 66 protrudes forward from a lower portion of the front surface of the case half body 63. A partition wall 67 that divides a space on a right side of the protruding portion 64 into an upper space and a lower space is formed in a central portion of the front surface of the case half body 63. A low voltage harness connector 68 is provided on a right side surface of the protruding portion 64 between the seat connecting portion 65 and the partition wall 67, and a high voltage harness connector 69 is provided on the right side surface of the protruding portion 64 between the partition wall 67 and the case fixing portion 66.

A seat hinge bracket (not shown) fixed to the seat 34 is swingably supported on the seat connecting portion 65. The seat 34 is supported from below by the battery 60 inside the seat frame cover 24 (see Fig. 1) via the seat hinge bracket. When the seat 34 is opened with a front end portion of the battery 60 as a fulcrum, the battery 60 inside the seat frame cover 24 is exposed to the outside. Since the seat connecting portion 65 is integrally formed in the case half body 63 on the right side, a supporting rigidity of the seat connecting portion 65 with respect to a downward load from the seat 34 is increased in a state where the seat 34 is opened.

The case fixing portion 66 is formed in a cylindrical shape with a mounting hole penetrating in the vehicle width direction. A long bolt is inserted into the mounting hole of the case fixing portion 66 and mounting holes of the pair of battery brackets 54, and the case fixing portion 66 is fixed to the pair of battery brackets 54 via the long bolt. Since the bridge 52 of the vehicle body frame 10 is brought close to the case fixing portion 66 of the battery case 61, the pair of battery brackets 54 are formed short to increase the supporting rigidity. Although not described in detail, the battery 60 is provided with a plurality of fixing portions that are fixed to the seat frame 14 in addition to the case fixing portion 66.

The charger 41 and the DC-DC converter 42 are attached to a right side surface of the battery case 61 via a plate-shaped bracket 46. The charger 41 is formed in a rectangular prism box shape, and is adjacent to a right side of a rear half portion of the battery case 61. The DC-DC converter 42 is formed in a rectangular prism box shape, and is adjacent to a right side of a front half portion of the battery case 61. A controller 47 is attached to the support frame 15 on a right side of the charger 41. As described above, the motor 43 (see Fig. 3) is provided below the battery 60, and the inverter 44 is provided between the pair of lower frames 13 in front of the motor 43.

A low voltage harness 71 and high voltage harnesses 72 and 73 are laid inside the straddle-type vehicle 1. The low voltage harness 71 is used to transmit a control signal, and connects respective electrical components including the DC-DC converter 42, the battery 60, and the controller 47. The high voltage harness 72 is used to supply electric power, and connects the charger 41, the DC-DC converter 42, and the battery 60. The high voltage harness 73 is used to supply electric power, and connects the battery 60 and the inverter 44. Although not described in detail, the inverter 44 and the motor 43 are also connected by a harness (not shown).

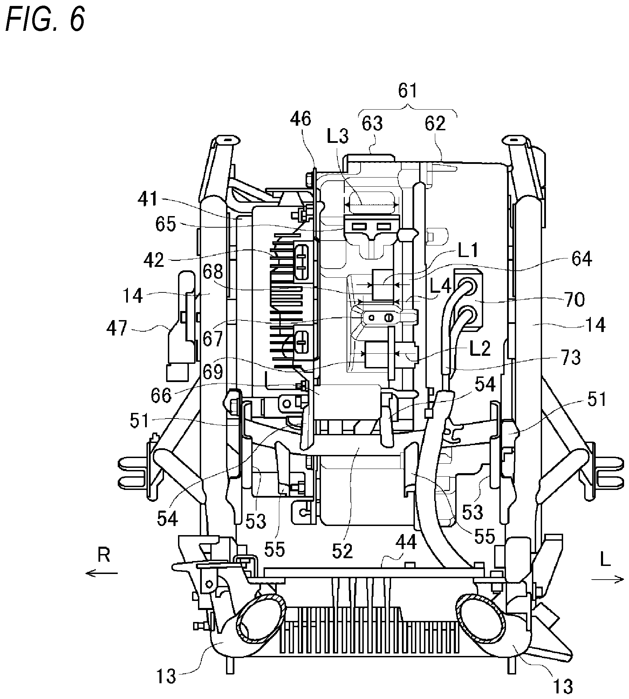

The low voltage harness 71 is connected to the low voltage harness connector 68 on an upper side of the front surface of the case half body 63 on the right side, and the high voltage harness 72 is connected to the high voltage harness connector 69 on a lower side of the front surface of the case half body 63 on the right side. The low voltage harness 71 and the high voltage harness 72 are drawn in a right direction from the low voltage harness connector 68 and the high voltage harness connector 69, respectively. The high voltage harness 73 is connected to a high voltage harness connector 70 (see Fig. 6) of the case half body 62 on the left side, and is drawn downward from the high voltage harness connector 70. The right side of the protruding portion 64 serves as a passage for the low voltage harness 71 and the high voltage harness 72, and the left side of the protruding portion 64 serves as a passage for the high voltage harness 73.

As shown in Fig. 5, when the seat frame cover 24 is attached to the vehicle body frame 10, the accommodation space of the battery 60 is formed inside the seat frame cover 24. The accommodation space of the battery 60 is formed such that a dimension in the vehicle width direction decreases from the vehicle rear side toward the vehicle front side. The protruding portion 64 (see Fig. 4) of a front surface of the battery case 61 is positioned at a front end of the accommodation space. Accordingly, the accommodation space is effectively utilized for installation of the battery case 61, and the battery capacity is sufficiently ensured by increasing a size of the battery. Even when the protruding portion 64 is positioned at the front end of the accommodation space, a mounting space for the low voltage harness 71 and the high voltage harnesses 72 and 73 (see Fig. 4) is sufficiently ensured.

A maintenance opening is formed in a front surface of the seat frame cover 24, and this maintenance opening is covered by a maintenance cover 27. The maintenance cover 27 is detachably attached to the partition wall 67 (see Fig. 4) on the front surface of the battery case 61 by a fixing member (not shown). By removing the maintenance cover 27 from the partition wall 67, it is possible to access the inside of the seat frame cover 24 from the outside. Thus, the battery case 61 is installed inside a body of the straddle-type vehicle 1 in consideration of an effective utilization of the accommodation space of the battery 60 and a maintainability of the battery 60.

Hereinafter, a detailed configuration of the battery will be described with reference to Figs. 6 and 7. Fig. 6 is a front view of the battery according to the present embodiment. Fig. 7 is a right side view of the battery according to the present embodiment.

As shown in Fig. 6, the vertically long protruding portion 64 is formed along mating surfaces of the left case half body 62 and the right case half body 63 on the front surface of the battery case 61. The seat connecting portion 65, the partition wall 67, and the case fixing portion 66 are formed on the right side of the protruding portion 64. The seat connecting portion 65 protrudes from an upper portion of the front surface of the battery case 61, the partition wall 67 protrudes from a central portion of the front surface of the battery case 61, and the case fixing portion 66 protrudes from a lower portion of the front surface of the battery case 61. An upper mounting space and a lower mounting space for the low voltage harness 71 and the high voltage harness 72 (see Fig. 4) is formed on the right side of the protruding portion 64 by the seat connecting portion 65, the partition wall 67, and the case fixing portion 66.

The low voltage harness connector 68 protrudes from the right side surface of the protruding portion 64 in the upper mounting space. The low voltage harness 71 extending from the respective electrical components is connected to the low voltage harness connector 68. A high voltage harness connector 69 protrudes from the right side surface of the protruding portion 64 in the lower mounting space. The high voltage harness 72 extending from the charger 41 or the like is connected to the high voltage harness connector 69. The high voltage harness connector 70 is provided on the front surface of the battery case 61 on the left side of the protruding portion 64. The high voltage harness 73 extending from the inverter 44 is connected to the high voltage harness connector 70.

In a front view, the low voltage harness connector 68 and the high voltage harness connector 69 overlap the battery case 61 (the case half body 63 on the right side). Specifically, the entire harness connectors 68 and 69 are positioned inside a projection surface on the front surface of the battery case 61. Further, protruding lengths L1 and L2 of the harness connectors 68 and 69 are formed shorter than a width L3 from the right side surface of the protruding portion 64 to a right end of the seat connecting portion 65 and a width L4 from the right side surface of the protruding portion 64 to a right end of the partition wall 67. Therefore, the harness connectors 68 and 69 are protected from an external force from a right side by the battery case 61, the seat connecting portion 65, and the partition wall 67.

As shown in Fig. 7, the low voltage harness connector 68 and the high voltage harness connector 69 overlap the protruding portion 64 in a left-right side view. Specifically, the entire harness connectors 68 and 69 are positioned inside a projection surface of a side surface of the projection surface 64. Accordingly, the harness connectors 68 and 69 are protected from an external force from a front by the protruding portion 64. The harness connectors 68 and 69 are covered with the seat connecting portion 65 from above, and the seat connecting portion 65 is disposed above the harness connectors 68 and 69 and at a position so as to overlap the harness connectors 68 and 69 viewed from an upper side. Accordingly, the harness connectors 68 and 69 are protected from an external force, a water droplet, or the like from above by the seat connecting portion 65. The harness connectors 68 and 69 are covered with the case fixing portion 66 from below, and the case fixing portion 66 is disposed below the harness connectors 68 and 69 and at a position so as to overlap the harness connectors 68 and 69 viewed from a lower side. Accordingly, the harness connectors 68 and 69 are protected from an external force, a water droplet, or the like from below by the case fixing portion 66.

The high voltage harness connector 69 is installed below the low voltage harness connector 68. Accordingly, the high voltage harness connector 69 is sufficiently separated from the rider seated on the seat 34 (see Fig. 1), and safety is enhanced. Both connector ports of the harness connectors 68 and 69 are directed to the right direction (front side in a paper of Fig. 7). Therefore, harnesses are connected to the harness connectors 68 and 69 from the same direction, and a mountability of the harness to the battery 60 is improved. A space directly below the seat connecting portion 65 is used as a connector mounting space, and the harness connectors 68 and 69 are prevented from protruding from a front end of the battery case 61, so that the accommodation space of the battery 60 is effectively utilized.

As described above, according to the present embodiment, the low voltage harness connector 68 and the high voltage harness connector 69 are protected from the external force from a front side by the protruding portion 64, and the low voltage harness connector 68 and the high voltage harness connector 69 are protected from the external force from a left-right side by the right side surface of the battery case 61. Therefore, there is no need to provide a protective member around the harness connectors 68 and 69, and the number of components can be reduced. The protrusion of the harness connectors 68 and 69 from an outer surface of the battery case 61 is prevented, and the accommodation space of the battery 60 is effectively utilized for the installation of the battery case 61, so that the battery capacity can be sufficiently ensured.

The battery of the present embodiment is not limited to the straddle-type vehicle of the scooter type, and may be adopted in other types of straddle-type vehicles. The straddle-type vehicle is not limited to a motorcycle, and may be a vehicle in which a battery is installed below the seat.

In the present embodiment, the low voltage harness connector and the high voltage harness connector are provided as the harness connector in the battery, but at least one of the low voltage harness connector and the high voltage harness connector may be provided. The number of harness connectors is not particularly limited.

In the present embodiment, the battery is provided with a signal connector as a low voltage harness connector and a power connector as a high voltage harness connector, but the low voltage harness may be connected to a harness connector with a lower voltage than the high voltage harness connector.

In the present embodiment, the protruding portion protrudes from the front surface of the battery case and the harness connector is provided on the side surface of the protruding portion, but the protruding portion may protrude from an upper surface or a rear surface of the battery case, and the harness connector may be provided on the side surface of the protruding portion. That is, the protruding portion may protrude from one surface of the battery case in a normal direction of the one surface to an outside of the battery case, and the harness connector may be provided on the side surface of the protruding portion. In the case, the harness connector overlaps the battery case viewed from the normal direction, and the harness connector overlaps the protruding portion viewed from an one direction of two directions perpendicular to the normal direction, such that the two directions are perpendicular to each other.

In the present embodiment, the seat connecting portion overlaps the harness connector from above viewed from the upper side, but a positional relationship between the seat connecting portion and the harness connector is not particularly limited as long as the harness connector can be protected from an external force from the front side and the left-right side.

In the present embodiment, the case fixing portion overlaps the harness connector from below viewed from the lower side, but a positional relationship between the case fixing portion and the harness connector is not particularly limited as long as the harness connector can be protected from an external force from the front side and the left-right side.

In the present embodiment, the charger, the DC-DC converter, the controller, and the respective electrical components are illustrated as examples of the electric device, but the electric device may be a component that is connected to the harness connector via the harness.

In the present embodiment, the battery is fixed to the vehicle body frame, but a battery holder may be fixed to the vehicle body frame, and the battery may be detachably attached to the battery holder.

As described above, the battery (60) according to the present embodiment is a battery to be installed below the seat (34) of the electric straddle-type vehicle (1), and the battery includes: the battery case (61) to be installed inside the body of the straddle-type vehicle; and the harness connector (the low voltage harness connector 68, the high voltage harness connector 69) to which the harness (the low voltage harness 71, the high voltage harness 72) extending from the electric device is connected, in which the protruding portion (64) protrudes from one surface of the battery case, and the harness connector is provided on a side surface of the protruding portion, and the harness connector overlaps the battery case viewed from a normal direction of the one surface , and the harness connector overlaps the protruding portion viewed from a direction perpendicular to the normal direction. According to this configuration, the harness connector is protected from the external force from the front side by the protruding portion, and the harness connector is protected from the external force from the left-right side by the battery case. The protrusion of the harness connector from the outer surface of the battery case is prevented, and the accommodation space of the battery is effectively utilized for installation of the battery case, so that the battery capacity can be sufficiently ensured.

In the battery of the present embodiment, the protruding portion protrudes from the front surface of the battery case, and the harness connector overlaps the battery case in the front view. According to this configuration, even if the accommodation space in which the dimension in the vehicle width direction decreases from the vehicle rear side toward the vehicle front side is formed below the seat, the accommodation space can be effectively utilized for the installation of the battery case.

In the battery of the present embodiment, the seat connecting portion (65) protrudes from the upper portion of the front surface of the battery case, and the seat connecting portion is disposed above the harness connector and at a position so as to overlap the harness connector viewed from an upper side. According to this configuration, the harness connector is protected from an external force, a water droplet, or the like from above by the seat connecting portion.

In the battery of the present embodiment, the case fixing portion (66) protrudes from the lower portion of the front surface of the battery case, and the case fixing portion is disposed below the harness connector and at a position so as to overlap the harness connector viewed from a lower side. According to this configuration, the harness connector is protected from an external force, a water droplet, or the like from below by the case fixing portion.

In the battery of the present embodiment, the harness connector includes the low voltage harness connector (68) to which the low voltage harness (71) is connected and the high voltage harness connector (69) to which the high voltage harness (72) is connected, and the high voltage harness connector is installed below the low voltage harness connector. According to this configuration, the high voltage harness connector can be sufficiently separated from the rider seated on the seat to enhance the safety.

Although the present embodiment has been described, the above-described embodiment and modifications may be combined entirely or partially as another embodiment.

### REFERENCE SIGNS LIST

1: straddle-type vehicle
10: vehicle body frame
34: seat
42: DC-DC converter (electric device)
47: controller (electric device)
60: battery
61: battery case
64: protruding portion
65: seat connecting portion
66: case fixing portion
68: low voltage harness connector (harness connector)
69: high voltage harness connector (harness connector)
71: low voltage harness (harness)
72: high voltage harness (harness)

## Claims

1. A battery (60) to be installed below a seat (34) of an electric straddle-type vehicle (1), the battery (60) comprising:
a battery case (61) of the battery (60) to be installed inside a body of the straddle-type vehicle (1); and
a harness connector (68, 69) installed in the battery (60) to which a harness (71, 72) extending from an electric device is connected, wherein
a protruding portion (64) is formed in and protrudes from one surface of the battery case (61), and the harness connector (68, 69) is provided on a side surface of the protruding portion (64), and
the harness connector (68, 69) overlaps the battery case (61) viewed from a normal direction of the one surface, and the harness connector (68, 69) overlaps the protruding portion (64) viewed from a direction perpendicular to the normal direction.

2. The battery (60) according to claim 1, wherein
the protruding portion (64) protrudes from a front surface of the battery case (61), and
the harness connector (68, 69) overlaps the battery case (61) in a front view.

3. The battery (60) according to claim 2, wherein
a seat connecting portion (65) protrudes from an upper portion of the front surface of the battery case (61), and
the seat connecting portion (65) is disposed above the harness connector (68, 69) and at a position so as to overlap the harness connector (68, 69) viewed from an upper side.

4. The battery (60) according to claim 2 or 3, wherein
a case fixing portion (66) protrudes from a lower portion of the front surface of the battery case (61), and
the case fixing portion (66) is disposed below the harness connector (68, 69) and at a position so as to overlap the harness connector (68, 69) viewed from a lower side.

5. The battery (60) according to any one of claims 2 to 4, wherein
the harness connector (68, 69) includes a low voltage harness connector (68) to which a low voltage harness (71) is connected and a high voltage harness connector (69) to which a high voltage harness (72) is connected, and
the high voltage harness connector (69) is installed below the low voltage harness connector (68).

6. The battery (60) according to claim 1, wherein
the protruding portion (64) protrudes from the one surface of the battery case (61) in the normal direction to an outside of the battery case (61).

## Patentansprüche

1. Batterie (60) zum Einbau unterhalb eines Sitzes (34) eines elektrischen Grätschsitzfahrzeugs (1), wobei die Batterie (60) Folgendes umfasst:
ein Batteriegehäuse (61) der Batterie (60) zum Einbau innerhalb einer Karosserie des Grätschsitzfahrzeugs (1); und
einen in der Batterie (60) eingebauten Kabelbaumverbinder (68, 69), mit dem ein Kabelbaum (71, 72), der sich von einer elektrischen Vorrichtung erstreckt, verbunden ist, wobei
ein hervorstehender Abschnitt (64) in einer Fläche des Batteriegehäuses (61) ausgebildet ist und von dieser hervorsteht und der Kabelbaumverbinder (68, 69) an einer Seitenfläche des hervorstehenden Abschnitts (64) bereitgestellt ist, und
der Kabelbaumverbinder (68, 69) aus einer Normalenrichtung der einen Fläche betrachtet das Batteriegehäuse (61) überlappt und der Kabelbaumverbinder (68, 69) aus einer Richtung senkrecht zu der Normalenrichtung betrachtet den hervorstehenden Abschnitt (64) überlappt.

2. Batterie (60) nach Anspruch 1, wobei
der hervorstehende Abschnitt (64) von einer Vorderfläche des Batteriegehäuses (61) hervorsteht und
der Kabelbaumverbinder (68, 69) in einer Vorderansicht das Batteriegehäuse (61) überlappt.

3. Batterie (60) nach Anspruch 2, wobei
ein Sitzverbindungsabschnitt (65) von einem oberen Abschnitt der Vorderfläche des Batteriegehäuses (61) hervorsteht und
der Sitzverbindungsabschnitt (65) über dem Kabelbaumverbinder (68, 69) und an einer Position angeordnet ist, um den Kabelbaumverbinder (68, 69) von einer oberen Seite betrachtet zu überlappen.

4. Batterie (60) nach Anspruch 2 oder 3, wobei
ein Gehäusebefestigungsabschnitt (66) von einem unteren Abschnitt der Vorderfläche des Batteriegehäuses (61) hervorsteht und
der Gehäusebefestigungsabschnitt (66) unter dem Kabelbaumverbinder (68, 69) und an einer Position angeordnet ist, um den Kabelbaumverbinder (68, 69) von einer unteren Seite betrachtet zu überlappen.

5. Batterie (60) nach einem der Ansprüche 2 bis 4, wobei
der Kabelbaumverbinder (68, 69) einen Niederspannungs-Kabelbaumverbinder (68), mit dem ein Niederspannungs-Kabelbaum (71) verbunden ist, und einen Hochspannungs-Kabelbaumverbinder (69), mit dem ein Hochspannungs-Kabelbaum (72) verbunden ist, beinhaltet und
der Hochspannungs-Kabelbaumverbinder (69) unter dem Niederspannungs-Kabelbaumverbinder (68) eingebaut ist.

6. Batterie (60) nach Anspruch 1, wobei
der hervorstehende Abschnitt (64) von der einen Fläche des Batteriegehäuses (61) in der Normalenrichtung zu einer Außenseite des Batteriegehäuses (61) hervorsteht.

## Revendications

1. Batterie (60) à installer sous un siège (34) d'un véhicule électrique de type enjambeur (1), la batterie (60) comprenant :
un boîtier de batterie (61) de la batterie (60) à installer à l'intérieur d'une carrosserie du véhicule de type enjambeur (1) ; et
un raccord de faisceau (68, 69) installé dans la batterie (60) auquel est branché un faisceau (71, 72) se prolongeant à partir d'un dispositif électrique, dans laquelle
une partie saillante (64) est formée dans une surface du boîtier de batterie (61) et fait saillie à partir de celle-ci, et le raccord de faisceau (68, 69) est prévu sur une surface latérale de la partie saillante (64), et
le raccord de faisceau (68, 69) chevauche le boîtier de batterie (61) vu d'une direction normale de la première surface, et le raccord de faisceau (68, 69) chevauche la partie saillante (64) vu d'une direction perpendiculaire à la direction normale.

2. Batterie (60) selon la revendication 1, dans laquelle
la partie saillante (64) fait saillie à partir d'une surface avant du boîtier de batterie (61), et
le raccord de faisceau (68, 69) chevauche le boîtier de batterie (61) dans une vue de face.

3. Batterie (60) selon la revendication 2, dans laquelle
une partie de raccordement de siège (65) fait saillie à partir d'une partie supérieure de la surface avant du boîtier de batterie (61), et
la partie de raccordement de siège (65) est disposée au-dessus du raccord de faisceau (68, 69) et au niveau d'une position telle qu'elle chevauche le raccord de faisceau (68, 69) vu d'un côté supérieur.

4. Batterie (60) selon la revendication 2 ou 3, dans laquelle une partie de fixation de boîtier (66) fait saillie à partir d'une partie inférieure de la surface avant du boîtier de batterie (61), et
la partie de fixation du boîtier (66) est disposée sous le raccord de faisceau (68, 69) et au niveau d'une position telle qu'elle chevauche le raccord de faisceau (68, 69) vu d'un côté inférieur.

5. Batterie (60) selon l'une quelconque des revendications 2 à 4, dans laquelle
le raccord de faisceau (68, 69) comporte un raccord de faisceau basse tension (68) auquel un faisceau basse tension (71) est branché et un raccord de faisceau haute tension (69) auquel un faisceau haute tension (72) est branché, et
le raccord de faisceau haute tension (69) est installé sous le raccord de faisceau basse tension (68).

6. Batterie (60) selon la revendication 1, dans laquelle
la partie saillante (64) fait saillie à partir de l'une des surfaces du boîtier de batterie (61) dans la direction normale vers l'extérieur du boîtier de batterie (61).
